# EUROPEAN PATENT SPECIFICATION

(11) **EP 3 395 759 B1**
(45) Date of publication and mention of the grant of the patent: **09.02.2022**
(21) Application number: 16878305.8
(22) Date of filing: 01.12.2016
(51) Int. Cl.: C01B 7/01, F17C 3/12, C01B 7/07

(54) **HYDROGEN CHLORIDE MIXTURE, METHOD FOR PRODUCING THE SAME, AND FILLING CONTAINER**
CHLORWASSERSTOFFGEMISCH, VERFAHREN ZUR HERSTELLUNG DAVON UND NACHFÜLLBEHÄLTER
MÉLANGE DE CHLORURE D'HYDROGÈNE, PROCÉDÉ POUR SA PRODUCTION ET RÉCIPIENT REMPLI DE CELUI-CI

(30) Priority: 22.12.2015 JP 2015249627
(43) Date of publication of application: 31.10.2018
(73) Proprietor: Showa Denko K.K., Tokyo 105-8518 (JP)
(72) Inventor: TANIMOTO Yosuke, Tokyo 105-8518 (JP); HOSHINO Yasuyuki, Tokyo 105-8518 (JP)
(74) Representative: Strehl Schübel-Hopf & Partner
(86) International application number: PCT/JP2016/085801
(87) International publication number: WO 2017/110412

(56) References cited:
- CN-A- 102 838 087
- JP-A- S63 256 120
- JP-A- 2002 054 799
- JP-A- 2003 028 392
- JP-A- 2003 028 392
- JP-A- 2003 119 003
- US-A1- 2002 174 893

## Description

### Technical Field

The present invention relates to a hydrogen chloride mixture, a method for producing the hydrogen chloride mixture, and a filling container.

### Background Art

Hydrogen chloride (HCl) is used as an etching gas, a cleaning gas, or a film formation gas when a semiconductor or the like is produced. In a case in which hydrogen chloride is used as a film formation gas, impurities remain in a film when the film formation gas contains impurities. Therefore, high-purity hydrogen chloride is required. Thus, improvement in the quality of such hydrogen chloride has been increasingly demanded.

However, hydrogen chloride gases filled into filling containers have had such problems as described below. In other words, hydrogen chloride contains a slight amount of water which is difficult to remove in a production step. Even in the case of filling a filling container with high-purity hydrogen chloride containing water of which the concentration is sufficiently low, the water is concentrated in the filling container. Therefore, there has been a problem that a hydrogen chloride gas containing water of which the concentration is insufficiently low may be released from the filling container. The problem will be described in detail below.

When a hydrogen chloride gas is released from a filling container, liquefied hydrogen chloride as a liquid phase evaporates because gas-liquid equilibrium is kept in the filling container. In such a case, water having a gas-liquid equilibrium constant of around 0.1 evaporates in a smaller amount than hydrogen chloride, and is therefore prone to remain in a liquid phase side. Water in the filling container is concentrated with releasing the hydrogen chloride gas. Therefore, in the early stage of the start of the release, the amount of water entrained in the hydrogen chloride gas is small, and the concentration of water in the hydrogen chloride gas is sufficiently low. With decreasing a liquid phase due to the evaporation, however, the amount of water entrained in the hydrogen chloride gas is gradually increased, and the concentration of water in the hydrogen chloride gas is increased.

For example, the concentration of water in a liquid phase is about 8 mol ppm at the completion of filling a filling container with hydrogen chloride commonly regarded as a high-purity product. However, water in a liquid phase side is concentrated with releasing a hydrogen chloride gas from the filling container, and the concentration of water in a gas phase is increased to 40 mol ppm in a state in which all of liquefied hydrogen chloride is finally gasified. A product in which the concentration of water is lower is marketed. However, the concentration of water in a liquid phase is about 2 mol ppm at the completion of filling a filling container with the product, and the concentration of water in a gas phase is 10 mol ppm in a state in which all of liquefied hydrogen chloride is finally gasified.

When the concentration of water in a hydrogen chloride gas is high, the water is prone to adhere to the inner wall surface of a pipe through which the hydrogen chloride gas flows. Because hydrogen chloride is absorbed into the water to form hydrochloric acid, the pipe may be corroded and degraded, and a repairing cost may be increased. Leakage of hydrogen chloride gas hazardous to human bodies due to the increasing degradation of the pipe may lead to disasters and accidents. A pipe often includes stainless steel. For example, when a hydrogen chloride gas is used as an etching gas for a semiconductor wafer, entrainment of a heavy metal such as nickel, chromium, or iron eluted from the pipe by corrosion in a hydrogen chloride gas may cause the heavy metal to adhere to a wafer surface to soil the wafer.

To solve such a problem, a technology of obtaining a dry hydrogen chloride gas by cooling a hydrogen chloride gas released from a cylinder filled with liquefied hydrogen chloride to condense and separate surplus water in entrained water is disclosed, for example, in PTL 1. However, the technology disclosed in PTL 1 has had a problem that a facility is complicated because the technology requires a cooling apparatus partitioned by a heating surface capable of heat exchange between the hydrogen chloride gas and a refrigerant as well as a collection container in which the condensed water is collected as hydrochloric acid.

In addition, PTL 1 describes that the dehydration method described above can be applied to a step of purifying hydrogen chloride. Thus, the application of the method is considered to enable dry liquefied hydrogen chloride to be obtained by compressing and liquefying hydrogen chloride after the dehydration, and filling a filling container with the hydrogen chloride. According to PTL 1, the concentration of water is considered to be able to be decreased to 0.05 mol ppm by decreasing a cooling temperature to -70°C.

However, liquefied hydrogen chloride in which the concentration of water was less than 1.0 mol ppm was not able to be obtained even when hydrogen chloride was actually cooled to -70°C, compressed and liquefied, and filled into a filling container. The concentration of water in a gas phase in a state in which all of the liquefied hydrogen chloride was gasified was finally increased to 5.0 mol ppm because water in the liquefied hydrogen chloride in which the concentration of water in a liquid phase was 1.0 mol ppm at the time of the completion of the filling into the filling container was concentrated with releasing a hydrogen chloride gas from the filling container. Therefore, a problem occurred that hydrogen chloride (hydrochloric acid) corroded stainless steel included in a pipe or the like.

### Citation List

### Patent Literature

PTL 1: JP 2003-119003 A

### Summary of Invention

### Technical Problem

Thus, an object of the present invention is to solve the problems of such conventional technologies as described above and to provide a hydrogen chloride mixture hardly corroding a metal and a method for producing the hydrogen chloride mixture. Another object of the present invention is to provide a filling container filled with a hydrogen chloride mixture hardly corroding a metal.

### Solution to Problem

To solve the problems, the present invention is defined in claims 1 to 8.

### Advantageous Effects of Invention

According to the present invention, a hydrogen chloride mixture hardly corroding a metal can be provided. Description of Embodiments

In the present invention, the concentration of water in hydrogen chloride is defined to suppress the corrosion of a metal due to hydrogen chloride. It has been commonly known that the corrosion of a metal due to hydrogen chloride is strongly influenced by the concentration of water. However, the influence of the concentration of water at a ppm level has been unclear.

As a result of intensively examining the corrosion of a metal due to a slight amount of water in hydrogen chloride, the present inventors surprisingly found that the corrosion of a metal is considerably suppressed when the concentration of water is at a sufficiently low ppm level. The present invention was thus accomplished. One embodiment of the present invention will be described in detail below.

A hydrogen chloride mixture of the present embodiment contains hydrogen chloride and water. The hydrogen chloride mixture is filled into a filling container so that at least a part of the hydrogen chloride mixture is liquid. The concentration of water in a gas phase is 0.001 mol ppm or more and less than 4.5 mol ppm. The concentration of water in a liquid phase is 0.01 mol ppm or more and less than 1 mol ppm.

The filling container of the present embodiment is a filling container filled with a hydrogen chloride mixture containing hydrogen chloride and water. The filling container is filled with the hydrogen chloride mixture so that at least a part of the hydrogen chloride mixture is liquid. The concentration of water in a gas phase is 0.001 mol ppm or more and less than 4.5 mol ppm. In addition, the concentration of water in a liquid phase is 0.01 mol ppm or more and less than 1 mol ppm.

The concentrations of water in the gas phase and the liquid phase are the concentrations of water in the gas phase and the liquid phase between the time of the completion of filling the hydrogen chloride mixture into the filling container and the time of releasing almost all of the hydrogen chloride mixture in the filling container.

When the concentration of water in the gas phase of a hydrogen chloride mixture in which the gas phase and a liquid phase coexist is less than 0.01 mol ppm, it is difficult to directly measure the concentration of water, and therefore, 1/10 of the concentration of water in the liquid phase is regarded as the concentration of water in the gas phase. This is based on the fact that it is experientially known that the concentration of water in hydrogen chloride in which a liquid phase and a gas phase coexist satisfies concentration of water in gas phase: concentration of water in liquid phase = 1: 10.

In such a hydrogen chloride mixture, the concentration of water in a liquid phase is very low at the time of the completion of filling the hydrogen chloride mixture into a filling container. Therefore, even if water is concentrated into a liquid phase side with releasing a hydrogen chloride mixture gas from the filling container, the concentration of water in the liquid phase is kept in the state of being sufficiently low until all of a liquefied hydrogen chloride mixture in the filling container is gasified. Thus, the concentration of water in the hydrogen chloride mixture gas released from the filling container is sufficiently low from the early stage of the releasing to the end stage of the releasing (the stage of gasifying all of the liquefied hydrogen chloride mixture in the filling container). Therefore, the corrosion of a metal due to the hydrogen chloride mixture gas released from the filling container can be considerably suppressed until the end stage of the releasing.

The concentration of water in the liquid phase is 0.01 mol ppm or more and less than 1 mol ppm, preferably 0.01 mol ppm or more and 0.95 mol ppm or less, more preferably 0.01 mol ppm or more and 0.45 mol ppm or less, and still more preferably 0.01 mol ppm or more and 0.05 mol ppm or less.

When the concentration of water in the liquid phase is less than 1 mol ppm, the concentration of water in a hydrogen chloride mixture gas released from the filling container is kept at a level at which the corrosion of a metal is suppressed (for example, less than 4.5 mol ppm), until the end stage of the releasing, even if water is concentrated in a liquid phase side with releasing the hydrogen chloride mixture gas from the filling container. It is difficult to confirm the concentration of water lower than 0.01 mol ppm.

The concentrations of water in the hydrogen chloride mixture in the filling container and the hydrogen chloride mixture gas released from the filling container are low as described above, and the hydrogen chloride mixture and the hydrogen chloride mixture gas hardly corrode a metal. Thus, a metal such as stainless steel can be used in a portion with which the hydrogen chloride mixture in the filling container and the hydrogen chloride mixture gas released from the filling container come in contact. For example, a portion with which a hydrogen chloride mixture in a filling container, a pipe, a production apparatus, a supply apparatus, a conveying apparatus, a reaction apparatus, or the like for a hydrogen chloride mixture comes in contact may include a metal such as stainless steel. The kind of usable stainless steel is not particularly limited. Examples of the kind include SUS316, SUS316L, SUS304, and SUS304L.

The initial filling amount G₀ (unit: kg) of the hydrogen chloride mixture into the filling container is not particularly limited, and may be set at 70% or more and 100% or less of the upper limit value of a mass calculated according to the internal volume V of the filling container, stipulated in Article 48-4 of the High Pressure Gas Safety Act. In other words, a ratio of V/G₀ of the internal volume V (unit: L) of the filling container to the initial filling amount G₀ (unit: kg) of the hydrogen chloride mixture into the filling container is not particularly limited, but may be set at 1.67 or more and 2.40 or less.

A case in which the ratio V/G₀ is 1.67 or more (i.e., a case in which the initial filling amount G₀ of the hydrogen chloride mixture into the filling container is 100% or less of the upper limit value of a mass calculated according to the internal volume V of the filling container) is safe because the hydrogen chloride mixture is not excessively filled into the filling container. In contrast, when the ratio V/G₀ is 2.40 or less (i.e., when the initial filling amount G₀ of the hydrogen chloride mixture into the filling container is 70% or more of the upper limit value of a mass calculated according to the internal volume V of the filling container), the efficiency of transporting the hydrogen chloride mixture by the filling container is high because the initial filling amount G₀ of the hydrogen chloride mixture with respect to the internal volume V of the filling container is sufficient.

A ratio V/G₀ of the internal volume V (unit: L) of the filling container to the initial filling amount G₀ (unit: kg) of the hydrogen chloride mixture into the filling container is more preferably 1.70 or more and 2.13 or less, and still more preferably 1.74 or more and 1.88 or less.

One embodiment of a method for producing such a hydrogen chloride mixture as described above will now be described. First, water is removed, by two dehydration steps, from a hydrogen chloride mixture gas in which the concentration of water is 1 mol ppm or more, to obtain a hydrogen chloride mixture gas in which the concentration of water is less than 0.5 mol ppm. In the first dehydration step, the hydrogen chloride mixture gas in which the concentration of water is 1 mol ppm or more is cooled to condense and separate water in the hydrogen chloride mixture gas. A hydrogen chloride mixture gas in which the concentration of water is 0.5 mol ppm or more and less than 1 mol ppm is obtained by cooling the hydrogen chloride mixture gas in which the concentration of water is 1 mol ppm or more to, for example, -69°C.

Subsequently, in the second dehydration step, the hydrogen chloride mixture gas dehydrated in the first dehydration step is brought into contact with a water adsorbent, and further dehydrated to allow the concentration of water to be less than 0.5 mol ppm. When the concentration of water in the hydrogen chloride mixture gas can be set at less than 0.5 mol ppm, the kind of the water adsorbent is not particularly limited, and examples of the kind include zeolite, activated carbon, silica gel, and diphosphorus pentaoxide. The kind of the zeolite is not particularly limited. The ratio between silica and alumina contained in the zeolite, and the diameters of pores in the zeolite are not particularly limited. The zeolite preferably has resistance to hydrogen chloride. Examples of the zeolite include molecular sieve 3A and high-silica zeolite.

The hydrogen chloride mixture gas in which the concentration of water is set at less than 0.5 mol ppm in the first dehydration step and the second dehydration step is compressed in a filling step, and filled into, for example, a filling container having a capacity of 1 L or more and 2000 L or less. In this case, the hydrogen chloride mixture gas is compressed and filled so that at least a part of the hydrogen chloride mixture gas is liquid, and the concentration of water in a liquid phase at the time of the completion of the filling is 0.01 mol ppm or more and less than 1 mol ppm.

A method for compressing the hydrogen chloride mixture gas and filling the hydrogen chloride mixture gas into the filling container is not particularly limited. Examples of the method include a method in which the pressure of a hydrogen chloride mixture gas is increased by a compressor to liquefy the hydrogen chloride mixture gas, and a low-boiling point component and a high-boiling point component are removed using a distillation column, followed by storing the resultant in a product tank and by transferring and filling the resultant from the product tank into a filling container.

The capacity of the filling container can be set at 1 L or more and 2000 L or less, and is preferably 2 L or more and 1800 L or less, and more preferably 3 L or more and 1500 L or less. A case in which the capacity of the filling container is 1 L or more results in excellent efficiency because the amount of usable hydrogen chloride mixture is large. In contrast, when the capacity of the filling container is 2000 L or less, it is easy to produce and transport the filling container.

When the hydrogen chloride mixture is filled into the filling container, the temperature of the filling container is not particularly limited, and the filling container may be cooled to -90°C or more and 0°C or less in advance. When water remains in the filling container, the concentration of water in the filled hydrogen chloride mixture is increased. Therefore, heating treatment under reduced pressure may be performed in advance so that the amount of water remaining in the filling container is 0.1 mol ppm or less.

Further, a ratio V/G₁ of the internal volume V (unit: L) of the filling container to the amount G₁ (unit: kg) of the hydrogen chloride mixture filled into the filling container in the filling step is not particularly limited, and may be set at 1.67 or more and 11.8 or less. A case in which the ratio V/G₁ is 1.67 or more is safe because the hydrogen chloride mixture is not excessively filled into the filling container. In contrast, when the ratio V/G₁ is 11.8 or less, the hydrogen chloride mixture is liquefied.

A ratio V/G₁ of the internal volume V (unit: L) of the filling container to the amount G₁ (unit: kg) of the hydrogen chloride mixture filled into the filling container in the filling step is more preferably 1.67 or more and 3.13 or less, and still more preferably 1.67 or more and 2.40 or less.

A method for measuring the concentration of water in a hydrogen chloride mixture in each step (first dehydration step, second dehydration step, and filling step) of the method for producing a hydrogen chloride mixture of the present embodiment is not particularly limited as long as being able to be a method by which the concentration at a level of around 0.01 mol ppm can be correctly measured. Examples of the method include a method using a mirror cooling dew-point meter, a Fourier transform infrared spectrometer (FT-IR), a phosphorus pentoxide-type moisture meter, or the like, and cavity ring-down spectroscopy (CRDS).

In the case of a gas phase, the concentration of water in the present invention is measured by cavity ring-down spectroscopy with a sample extracted from a gas phase portion in the filling container. In the case of a liquid phase, the concentration is measured by cavity ring-down spectroscopy, similarly with the case of the gas phase, with a sample extracted from a liquid phase portion in the filling container and then gasified.

According to the method for producing a hydrogen chloride mixture of the present embodiment, a hydrogen chloride mixture in which the concentration of water is very low, and the corrosion of a metal such as stainless steel hardly occurs can be produced by a simple facility. The hydrogen chloride mixture produced by the method for producing a hydrogen chloride mixture of the present embodiment can be used as an etching gas or a cleaning gas when a semiconductor or a thin-film transistor is produced.

Particularly in an epitaxial growth process for Si-Ge (semiconductor), GaN (light-emitting diode or the like), or SiC (power semiconductor), the hydrogen chloride mixture is used not only as a cleaning gas and also as a film formation gas. When an impurity exists in the film formation gas, the impurity remains in a film. Therefore, the hydrogen chloride mixture obtained by the method for producing a hydrogen chloride mixture of the present embodiment is very useful. Further, the hydrogen chloride mixture obtained by the method for producing a hydrogen chloride mixture of the present embodiment can also be used for producing various chemicals such as pharmaceutical products and dye intermediates.

The present embodiment shows an example of the present invention, and the present invention is not limited to the present embodiment. Various modifications or improvements may be made to the present embodiment, and an embodiment to which such modifications or improvements are made can also be encompassed in the present invention.

### Examples

Examples and Comparative Examples will be described below to explain the present invention in more detail.

### [Example 1]

Into a filling container having a capacity of 47 L, 25 kg of a hydrogen chloride mixture containing hydrogen chloride and water was filled so that a part of the hydrogen chloride mixture was liquid. The hydrogen chloride mixture in the filling container was separated into a gas phase and a liquid phase, and the concentration of water in the liquid phase at the time of the completion of the filling was 0.80 mol ppm.

The gas phase was extracted from the filling container at a release rate of 2 L/min until the amount of the hydrogen chloride mixture remaining in the filling container became 3 kg. In this state, the liquid phase in the filling container disappeared, all of the hydrogen chloride mixture was gasified, and the concentration of water in the hydrogen chloride mixture was 4.0 mol ppm.

A test piece made of SUS316L, with a rectangular shape (having a width of 10 mm, a length of 50 mm, and a thickness of 1 mm) , was prepared, the mass of the test piece was measured, and the test piece was hung with a string made of Teflon (registered trademark) in a pressure-resistant container. The hydrogen chloride mixture gas in which the concentration of water was 4.0 mol ppm was introduced into the pressure-resistant container to achieve an internal pressure of 0.5 MPaG.

The pressure-resistant container was left standing for five days in the state of being heated to 100°C, and then sufficiently purged with N₂. After confirmation that the concentration of hydrogen chloride was less than 0.1 mol ppm, the pressure-resistant container was opened, and the test piece was taken out. The taken test piece was ultrasonically cleaned with each of ultrapure water and 10% by mass of aqueous nitric acid solution for 10 minutes, the mass of the test piece was then measured, and a corrosion rate was calculated from the change of the mass. As a result, the corrosion rate was 1.0 µm/y.

### [Example 2]

The same operation as in Example 1 except that the concentration of water in a liquid phase at the time of the completion of filling into a filling container was 0.40 mol ppm was performed to obtain a hydrogen chloride mixture gas in which the concentration of water was 2.0 mol ppm. The same operation as in Example 1 except that the hydrogen chloride mixture gas was used was performed to measure the corrosion rate of a test piece. The corrosion rate was 0.81 µm/y.

### [Example 3]

The same operation as in Example 1 except that the concentration of water in a liquid phase at the time of the completion of filling into a filling container was 0.050 mol ppm was performed to obtain a hydrogen chloride mixture gas in which the concentration of water was 0.25 mol ppm. The same operation as in Example 1 except that the hydrogen chloride mixture gas was used was performed to measure the corrosion rate of a test piece. The corrosion rate was 0.52 µm/y.

### [Example 4]

The same operation as in Example 1 except that the concentration of water in a liquid phase at the time of the completion of filling into a filling container was 0.010 mol ppm was performed to obtain a hydrogen chloride mixture gas in which the concentration of water was 0.050 mol ppm. The same operation as in Example 1 except that the hydrogen chloride mixture gas was used was performed to measure the corrosion rate of a test piece. The corrosion rate was 0.44 µm/y.

### [Comparative Example 1]

The same operation as in Example 1 except that the concentration of water in a liquid phase at the time of the completion of filling into a filling container was 1.0 mol ppm was performed to obtain a hydrogen chloride mixture gas in which the concentration of water was 5.0 mol ppm. The same operation as in Example 1 except that the hydrogen chloride mixture gas was used was performed to measure the corrosion rate of a test piece. The corrosion rate was 7.4 µm/y.

### [Comparative Example 2]

The same operation as in Example 1 except that the concentration of water in a liquid phase at the time of the completion of filling into a filling container was 2.0 mol ppm was performed to obtain a hydrogen chloride mixture gas in which the concentration of water was 10 mol ppm. The same operation as in Example 1 except that the hydrogen chloride mixture gas was used was performed to measure the corrosion rate of a test piece. The corrosion rate was 54 µm/y.

The results (see Table 1) reveals that when the concentration of water in a liquid phase at the time of the completion of filling into a filling container is less than 1 mol ppm, the concentration of water in a hydrogen chloride mixture gas released from the filling container is sufficiently low until the end stage of the release (the stage of gasifying all of a liquefied hydrogen chloride mixture in the filling container), and therefore, the corrosion of a metal is considerably suppressed.

**[Table 1]**

| | Example 1 | Example 2 | Example 3 | Example 4 | Comparative Example 1 | Comparative Example 2 |
|---|---|---|---|---|---|---|
| Concentration of water in liquid phase at time of completion of filling (mol ppm) | 0.80 | 0.40 | 0.05 | 0.01 | 1.0 | 2.0 |
| Concentration (mol ppm) of water in gas phase after extraction of gas phase until residual amount becomes 3 kg | 4.0 | 2.0 | 0.25 | 0.05 | 5.0 | 10 |
| Corrosion rate (µm/γ) | 1.0 | 0.81 | 0.52 | 0.44 | 7.4 | 54 |

### [Example 5]

An example of a method for producing a hydrogen chloride mixture in which the concentration of water is less than 1 mol ppm will now be described. A raw hydrogen chloride mixture gas in which the concentration of water was 1000 mol ppm was fed at a flow rate of 320 m³/h to a cooler condenser, and cooled to -10°C to condense the water in the raw hydrogen chloride mixture gas and to remove a part of the water in the raw hydrogen chloride mixture gas.

Further, the raw hydrogen chloride mixture gas from which the part of the water had been removed was fed to a water adsorption tower, brought into contact with a water adsorbent (Molecular Sieve 3A manufactured by UNION SHOWA K.K.) filled in the water adsorption tower, and dehydrated. With regard to the velocities of circulation of the raw hydrogen chloride mixture gas, the linear velocity LV was 10 m/min, and the space velocity SV was 1000/h. The concentration of water in the hydrogen chloride mixture gas at the outlet of the water adsorption tower was 0.34 mol ppm.

Into a filling container having a capacity of 47 L, 25 kg of the hydrogen chloride mixture gas in which the concentration of water was 0.34 mol ppm was filled, while increasing the pressure of the hydrogen chloride mixture gas by a pump. The concentration of water in a liquefied hydrogen chloride mixture (liquid phase) in the filling container was 0.41 mol ppm.

### [Comparative Example 3]

A raw hydrogen chloride mixture gas in which the concentration of water was 1000 mol ppm was fed at a flow rate of 320 m³/h to a cooler condenser, and cooled to -69°C to condense the water in the raw hydrogen chloride mixture gas and to remove a part of the water in the raw hydrogen chloride mixture gas. The concentration of water in the obtained hydrogen chloride mixture gas was 0.51 mol ppm.

Into a filling container having a capacity of 47 L, 25 kg of the hydrogen chloride mixture gas in which the concentration of water was 0.51 mol ppm was filled, while increasing the pressure of the hydrogen chloride mixture gas by a pump. The concentration of water in a liquefied hydrogen chloride mixture (liquid phase) in the filling container was 1.0 mol ppm.

The results reveal that a hydrogen chloride mixture in which the concentration of water is less than 1 mol ppm can be obtained by establishing two-stage dehydration steps of a step of performing cooling to condense water and a step of performing contact with a water adsorbent.

## Claims

1. A hydrogen chloride mixture comprising hydrogen chloride and water, wherein the hydrogen chloride mixture is filled into a filling container so that at least a part of the hydrogen chloride mixture is liquid; and a concentration of water in a liquid phase is 0.01 mol ppm or more and less than 1 mol ppm.

2. A method for producing a hydrogen chloride mixture comprising hydrogen chloride and water, the method including:
a first dehydration step of cooling a hydrogen chloride mixture gas in which a concentration of water is 1 mol ppm or more, to condense and separate water in the hydrogen chloride mixture gas and to obtain a hydrogen mixture gas in which the concentration of water is 0.5 mol ppm or more and less than 1 mol ppm;
a second dehydration step of bringing a hydrogen chloride mixture gas obtained in the first dehydration step into contact with a water adsorbent to allow a concentration of water to be less than 0.5 mol ppm; and
a filling step of filling a filling container with a hydrogen chloride mixture gas obtained in the second dehydration step so that at least a part of the hydrogen chloride mixture gas is liquid, and a concentration of water in a liquid phase at a time of completion of the filling is 0.01 mol ppm or more and less than 1 mol ppm.

3. The method for producing a hydrogen chloride mixture according to claim 2, wherein at least a part of the filling container comprises stainless steel.

4. The method for producing a hydrogen chloride mixture according to claim 2 or 3 wherein a ratio V/G1 of an internal volume V (unit: L) of the filling container to an amount G1 (unit: kg) of the hydrogen chloride mixture filled into the filling container in the filling step is 1.67 or more and 11.8 or less.

5. A filling container filled with a hydrogen chloride mixture comprising hydrogen chloride and water so that at least a part of the hydrogen chloride mixture is liquid; and a concentration of water in a liquid phase is 0.01 mol ppm or more and less than 1 mol ppm; wherein at least a part of the filling container comprises stainless steel.

6. The filling container according to claim 5, wherein a ratio V/G0 of an internal volume V (unit: L) to an initial filling amount G0 (unit: kg) of the hydrogen chloride mixture is 1.67 or more and 2.40 or less.

7. The filling container according to any one of claims 5 and 6 wherein the filling container has a capacity of 1 L or more and 2000 L or less.

## Patentansprüche

1. Chlorwasserstoffmischung, die Chlorwasserstoff und Wasser enthält, wobei die Chlorwasserstoffmischung in einen Füllbehälter gefüllt ist, so dass mindestens ein Teil der Chlorwasserstoffmischung flüssig ist; und die Wasserkonzentration in einer flüssigen Phase 0,01 mol ppm oder mehr und weniger als 1 mol ppm beträgt.

2. Verfahren zur Herstellung einer Chlorwasserstoffmischung, die Chlorwasserstoff und Wasser enthält, wobei das Verfahren umfasst:
einen ersten Entwässerungsschritt, bei dem ein Chlorwasserstoffgasgemisch, worin die Wasserkonzentration 1 mol ppm oder mehr beträgt, gekühlt wird, um in dem Chlorwasserstoffgasgemisch Wasser zu kondensieren und abzutrennen und ein Wasserstoffgasgemisch zu erhalten, worin die Wasserkonzentration 0,5 mol ppm oder mehr und weniger als 1 mol ppm beträgt;
einen zweiten Entwässerungsschritt, bei dem ein im ersten Entwässerungsschritt erhaltenes Chlorwasserstoffgasgemisch mit einem Wasseradsorptionsmittel in kontaktiert wird, um eine Wasserkonzentration von weniger als 0,5 mol ppm zu ermöglichen; und
einen Füllschritt, bei dem ein Füllbehälter mit einem Chlorwasserstoffgasgemisch, das in dem zweiten Entwässerungsschritt erhalten wurde, befüllt wird, so dass mindestens ein Teil des Chlorwasserstoffgasgemischs flüssig ist und die Wasserkonzentration in einer flüssigen Phase zum Zeitpunkt der Beendigung des Füllens 0,01 mol ppm oder mehr und weniger als 1 mol ppm beträgt.

3. Verfahren zur Herstellung eines Chlorwasserstoffgemisches nach Anspruch 2, wobei zumindest ein Teil des Füllbehälters aus rostfreiem Stahl besteht.

4. Verfahren zur Herstellung eines Chlorwasserstoffgemisches nach Anspruch 2 oder 3, wobei das Verhältnis V/G1 des Innenvolumens V (Einheit: L) des Füllbehälters zu einer Menge G1 (Einheit: kg) des Chlorwasserstoffgemisches, das im Füllschritt in den Füllbehälter gefüllt wird, 1,67 oder mehr und 11,8 oder weniger beträgt.

5. Füllbehälter, der mit einer Chlorwasserstoff und Wasser enthaltenden Chlorwasserstoffmischung gefüllt ist, so dass mindestens ein Teil der Chlorwasserstoffmischung flüssig ist; und eine Konzentration von Wasser in einer flüssigen Phase 0,01 mol ppm oder mehr und weniger als 1 mol ppm beträgt; wobei mindestens ein Teil des Füllbehälters rostfreien Stahl umfasst.

6. Füllbehälter nach Anspruch 5, wobei das Verhältnis V/G0 des Innenvolumens V (Einheit: L) zu einer Anfangsfüllmenge G0 (Einheit: kg) des Chlorwasserstoffgemisches 1,67 oder mehr und 2,40 oder weniger beträgt.

7. Füllbehälter nach einem der Ansprüche 5 und 6, wobei der Füllbehälter ein Fassungsvermögen von 1 L oder mehr und 2000 L oder weniger hat.

## Revendications

1. Mélange de chlorure d'hydrogène comprenant du chlorure d'hydrogène et de l'eau, dans lequel le mélange de chlorure d'hydrogène est chargé dans un récipient à charger de sorte qu'au moins une partie du mélange de chlorure d'hydrogène est liquide ; et une concentration d'eau dans une phase liquide est de 0,01 ppm en mol ou plus et de moins de 1 ppm en mol.

2. Procédé de production d'un mélange de chlorure d'hydrogène comprenant du chlorure d'hydrogène et de l'eau, le procédé comportant :
une première étape de déshydratation consistant à refroidir un mélange de chlorure d'hydrogène gazeux dans lequel une concentration d'eau est de 1 ppm en mol ou plus, pour condenser et séparer l'eau dans le mélange de chlorure d'hydrogène gazeux et pour obtenir un mélange d'hydrogène gazeux dans lequel la concentration d'eau est de 0,5 ppm en mol ou plus et de moins de 1 ppm en mol ;
une seconde étape de déshydratation consistant à amener un mélange de chlorure d'hydrogène gazeux obtenu dans la première étape de déshydratation en contact avec un adsorbant d'eau pour permettre à une concentration d'eau d'être inférieure à 0,5 ppm en mol ; et
une étape de chargement consistant à charger un récipient à charger avec un mélange de chlorure d'hydrogène gazeux obtenu dans la seconde étape de déshydratation de sorte qu'au moins une partie du mélange de chlorure d'hydrogène gazeux est liquide, et
une concentration d'eau dans une phase liquide au moment de l'achèvement du chargement est de 0,01 ppm en mol ou plus et de moins de 1 ppm en mol.

3. Procédé de production d'un mélange de chlorure d'hydrogène selon la revendication 2, dans lequel au moins une partie du récipient à charger comprend de l'acier inoxydable.

4. Procédé de production d'un mélange de chlorure d'hydrogène selon la revendication 2 ou 3, dans lequel un rapport V/G1 d'un volume interne V (unité : 1) du récipient à charger à une quantité G1 (unité : kg) du mélange de chlorure d'hydrogène chargé dans le récipient à charger dans l'étape de chargement est de 1,67 ou plus et de 11,8 ou moins.

5. Récipient à charger chargé avec un mélange de chlorure d'hydrogène comprenant du chlorure d'hydrogène et de l'eau de sorte qu'au moins une partie du mélange de chlorure d'hydrogène est liquide ; et une concentration d'eau dans une phase liquide est de 0,01 ppm en mol ou plus et de moins de 1 ppm en mol; dans lequel au moins une partie du récipient à charger comprend de l'acier inoxydable.

6. Récipient à charger selon la revendication 5, dans lequel un rapport V/G0 d'un volume interne V (unité : 1) à une quantité de chargement initiale G0 (unité : kg) du mélange de chlorure d'hydrogène est de 1,67 ou plus et de 2,40 ou moins.

7. Récipient à charger selon l'une quelconque des revendications 5 et 6, dans lequel le récipient à charger a une capacité de 1 l ou plus et de 2 000 l ou moins.
